(19) Europäisches Patentamt
European Patent Office
Office européen des brevets

(11) **EP 2 401 635 B1**

(12) **EUROPEAN PATENT SPECIFICATION**

(45) Date of publication and mention
of the grant of the patent:
**03.04.2019 Bulletin 2019/14**

(21) Application number: **10713231.8**

(22) Date of filing: **25.02.2010**

(51) Int Cl.:
***G01T 1/164*** *(2006.01)*

(86) International application number:
**PCT/GB2010/050318**

(87) International publication number:
**WO 2010/097621 (02.09.2010 Gazette 2010/35)**

(54) **X-RAY SCANNERS**

RÖNTGENSCANNER

APPAREIL DE DÉTECTION À RAYONS X

(84) Designated Contracting States:
**AT BE BG CH CY CZ DE DK EE ES FI FR GR HR HU IE IS IT LI LT LU LV MC MK MT NL NO PL PT RO SE SI SK SM TR**

(30) Priority: **25.02.2009 GB 0903198**

(43) Date of publication of application:
**04.01.2012 Bulletin 2012/01**

(60) Divisional application:
**11190806.7 / 2 629 119**
**11190809.1 / 2 541 279**
**11190810.9 / 2 490 043**

(73) Proprietor: **CXR Limited**
**London**
**EC4M 9AF (GB)**

(72) Inventors:
• **MORTON, Edward, James**
  **Guildford**
  **Surrey GU1 2SL (GB)**

• **LUGGAR, Russell, David**
  **Dorking**
  **Surrey RH4 2DN (GB)**

• **DE ANTONIS, Paul**
  **Horsham**
  **West Sussex RH12 2JU (GB)**

(74) Representative: **Barker Brettell LLP**
**Medina Chambers**
**Town Quay**
**Southampton SO14 2AQ (GB)**

(56) References cited:
EP-A1- 0 198 276          WO-A1-2006/027122
WO-A1-2007/068933   WO-A2-2008/027703
DE-A1- 4 436 688         GB-A- 2 423 687
US-A- 5 796 802           US-A1- 2004 096 030
US-A1- 2006 008 047   US-A1- 2008 237 480
US-B1- 6 542 580

## Description

### Field of the Invention

The present invention relates to X-rays scanners and scanner systems. It has particular application in scanner systems for scanning baggage and cargo, but can also be used in other types of X-ray scanner.

### Background of the Invention

In typical computed tomography systems, X-rays, generated by an X-ray source, are collimated to form a fan beam that is transmitted through an imaged object to an X-ray detector array orientated within the imaging plane. The detector array is comprised of detector elements which each measure the intensity of transmitted radiation along a ray projected from the X-ray source to that particular detector element. The X-ray source and detector array are typically rotated on a gantry within the imaging plane, around the imaged object, so that the fan beam intercepts the imaged object at different angles. At each angle, a projection is acquired comprised of the intensity signals from each of detector elements. The gantry is then rotated to a new angle and the process is repeated to collect a number of projections at different angles to form a tomographic projection set. In alternate tomography systems, the detector array remains fixed and comprises a 360 degree ring of detectors and the source is moved arcwise around the imaged object through 180 degrees plus the fan beam angle or more of arc. In such systems, only the X-ray source is rotated to acquire the tomographic projection set. Another prior art system is known from WO 2007/068933.

The time and expense of a tomographic study increases with the number of slices required. The time required to collect the data for a series of slices depends in part on aspects such as a) the time required to accelerate the gantry to scanning speed, b) the time required to obtain a complete tomographic projection set, c) the time required to decelerate the gantry and d) the time required to reposition the object in the z-axis for the next slice. Reducing the time required to obtain a full slice series may be accomplished by reducing the time required to complete any of these four steps. Additionally, movement of the object under inspection as well as the motion of the X-ray source and/or detector array, using the gantry, results in creation of unacceptably high levels of artefact in reconstructed images.

Accordingly, there is need in the prior art to reduce the overall time of conducting a tomographic inspection. There is also need to improve the overall imaging quality of tomographic inspection by addressing causes leading to image artefacts - particularly those induced by physical motion of the source-detector assembly.

## Summary of the Invention

The present invention provides an X-ray scanner comprising: X-ray source means arranged to emit X-rays through an imaging volume from a plurality of X-ray tubes configured into a substantially circular arrangement around an axis of the scanner, each tube containing an X-ray source point; an array of X-ray detectors arranged around the imaging volume and arranged to output detector signals in response to the detection of X-rays; conveying means arranged to convey an object through the imaging volume in a scan direction; processing means arranged to process the detector signals to produce an image data set defining an image of the object; a control means arranged to activate the source points in a predetermined sequence once in each of a sequence of scan cycles; characterized in that the control means is arranged to control the frequency of the scan cycles, and is arranged to adjust the frequency of the scan cycles so as to provide a constant resolution in the scan direction for a plurality of object speeds, and wherein the control means is arranged to control the current of the X-ray tubes so that the current varies in direct proportion to the speed of the conveying means.

In some embodiments the resolution in the scan direction may be higher, for example at least 20% or in some cases 50 % higher, than the resolution in one, or two, other orthogonal directions. The image may have a resolution in at least two directions, the scan direction ($R1$) and a direction orthogonal to the scan direction ($R2$). In some embodiments of the present invention, $R1 \geq (0.90){*}R2$. In some cases $R1 \geq R2$.

The resolution in the scan direction may be substantially equal to the resolution in the other two directions. For example the resolutions may all be within 10% of each other, and preferably within 5% of each other.

The source points may be arranged in a plane perpendicular to the scan direction. The detectors of the array may be located in a plane which is perpendicular to the scan direction, or a plurality of such planes.

The detector array may be offset from the source points in the scan direction. The detector array may be at least two detectors wide in the scan direction, and may for example be up to six or eight detectors wide, or in some cases up to ten detectors wide in the scan direction. The detectors may be arranged in a plurality of rings, the rings being in respective planes, which may be spaced from each other in the scan direction. In this case there may be ten rings or less, or in some cases eight rings or less, or even six rings or less. The detectors may have a width in a circumferential direction and each detector may be offset in the circumferential direction from one adjacent to it in the scan direction. Each detector may have a width in the circumferential direction and the offset is less than the width. According to the invention, the scanner comprises a controller arranged to activate each of the source points in a predetermined sequence, once in each of a sequence of scan cycles. The controller may be arranged to control the frequency of the scan cycles so that it takes an integer number, which may be greater than one, of scan periods for the object to move a distance in the scan direction equal to the spacing of the detectors in the scan direction.

The scan cycle frequency is variable so that the resolution in the scan direction can be adjusted. The control means is arranged to adjust the scan frequency so as to provide a constant resolution in the scan direction for a plurality of object speeds.

The conveyor may be arranged to convey the object at a speed of at least 0.1m/s, or at least 0.5m/s, or at least 1.0m/s. The scanner may be arranged to generate an image data set having a signal to noise ratio of at least 60, or at least 80, or at least 100. The image may be made up of voxels having a size in the scan direction of 5mm or less, or 4mm or less, or 3mm or less, or 2mm or less, or 1.1mm or less. The image voxels may have a size in the two directions orthogonal to the scan direction which is 5mm or less, or 4mm or less, or 3mm or less, or 2mm or less, or 1.1mm or less.

Some embodiments of the invention can provide a motionless X-ray imaging system able to generate reconstructed three-dimensional X-ray images with a conveyor speed of 0.25 m/s to 1.0 m/s, corresponding to a throughput of 800 to 3000 items per hour, for scanned objects of length 1m in the scan direction and spaced along the conveyor with a slot length of 1.2m in the scan direction, with equal spatial resolution in all dimensions (2mm and better) with a reconstructed pixel size of 1.5 mm x 1.5 mm x 1.5 mm or less with a reconstructed image signal-to-noise ratio of 50 or better, and typically in excess of 100, with no more than eight rings of X-ray detectors.

## Brief Description of the Drawings

These and other features and advantages of the present invention will be appreciated, as they become better understood by reference to the following detailed description when considered in connection with the accompanying drawings:

Figure 1 is a transverse section through a scanner system according to an embodiment of the invention;
Figure 2 is a longitudinal section through the scanner system of Figure 1;
Figure 3 is a table of exemplary, but not limiting, performance characteristics of the system of Figure 1;
Figure 4 is a table of exemplary, but not limiting, operating characteristics for one mode of operation of the system of Figure 1;
Figure 5 shows a detector array in a scanner according to a further embodiment of the invention;
Figure 6 shows a part of an image produced using the detector array of Figure 5;
Figure 7 is a schematic view of a scanning system according to one embodiment of the invention;

Figure 8 is a schematic view of a scanning system according to one embodiment of the invention;
Figure 9 is a view of the system of Figure 8 split into its constituent parts;
Figure 10 is a front view of a user input panel of the embodiment of Figure 9:
Figure 11 is a longitudinal section through the system of Figure 8;
Figure 12 is a table of exemplary, but not limiting, operating characteristics for one mode of operation of the system of Figure 1;
Figure 13 is a graph showing variation of reconstructed signal-to-noise ratio with respect to tube voltage for the system of Figure 1;
Figure 14 shows an embodiment of scintillation detector with photodiode electronics readout used in operation of the system of Figure 1;
Figure 15 shows an embodiment of collimation and radiation shielding structures to reduce scatter during operation of the system of Figure 1;
Figure 16 shows an embodiment of the electron gun operated in space charge limited mode during operation of the system of Figure 1; and
Figure 17 shows an embodiment of the cooling system for controlling temperature of detectors of the system of Figure 1.

## Detailed Description

Various modifications to the preferred embodiment, disclosed herein, will be readily apparent to those of ordinary skill in the art and the disclosure set forth herein may be applicable to other embodiments and applications without departing from the scope of the present invention and the claims hereto appended.

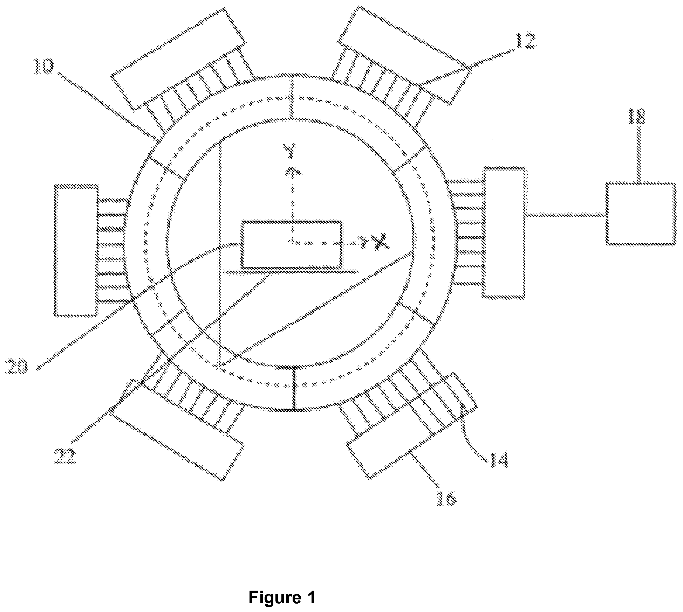

Referring to Figure 1, according to the present invention, an X-ray scanner comprises a plurality of X-ray tubes 10 which are configured into a substantially circular arrangement around the scanner axis wherein each X-ray tube 10 contains an X-ray source point 12. The emission of X-rays from the source point 12 in each of the X-ray tubes 10 is controlled by a switching circuit 14, with one independent switching circuit for each X-ray source point. The switching circuits for each tube 10 together form part of a control circuit 16 for that tube. A controller 18 controls operation of all of the individual switching circuits 14. The switching circuits 14 are controlled to fire in a pre-determined sequence such that in each of a series of activation periods, fan-shaped beams of X-rays from one or more active source points propagate through an object 20 which is mounted on a conveyor 22 towards the centre of the arrangement of X-ray tubes 10.

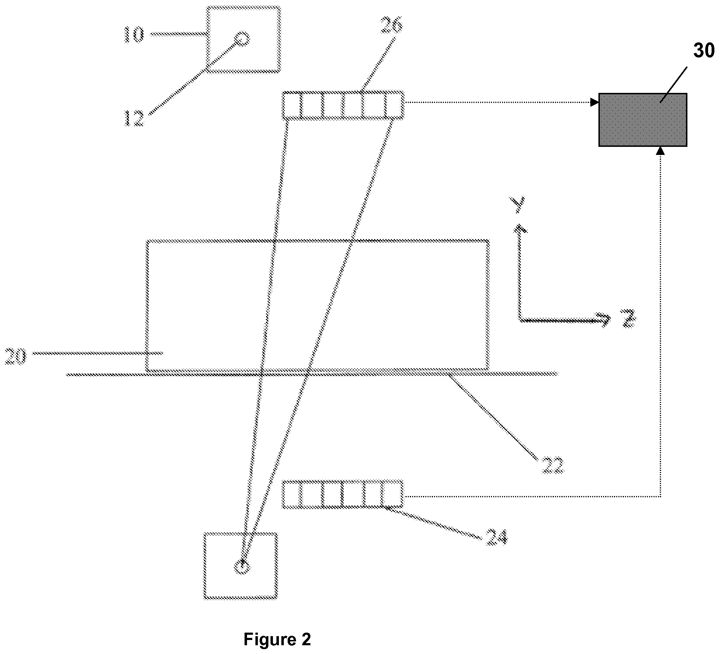

Referring to Figure 2, the scanner further comprises an array of X-ray detectors 24 extending around the scanner axis. The detector array is made up of a number of detector rings 26. Each ring is in a plane perpendicular to the scanner axis or a plurality of such planes. The scanner axis is referred to as the Z-direction and the two orthogonal directions, one horizontal and one vertical, are referred to as the X-direction and the Y-direction. The source points 12, in one embodiment, are arranged in a plane perpendicular to the scan direction.

The X-Y plane or planes in which the X-ray tube source points 12 are located are offset from the planes of the X-ray detectors 24 such that there is an unobstructed path, except for the conveyor 22 and the object 20 under inspection, from each active source point 12 to its associated set of X-ray detectors 24. Thus, in one embodiment, the detectors 24 have a width in a circumferential direction and each detector is offset in the circumferential direction from one adjacent to it in the scan direction. Each detector has a width in the circumferential direction and the offset is less than the width, in one embodiment.

In one embodiment, the detector array 24 is at least two detectors wide in the scan direction, and may for example be up to six or eight detectors wide, or in some cases up to ten detectors wide in the scan direction. As mentioned earlier, the detectors may be arranged in a plurality of rings, the rings being in respective planes, which may be spaced from each other in the scan direction. In this case there may be ten rings or less, or in some cases eight rings or less, or even six rings or less. In alternate embodiments, the detectors may be arranged in one or more helical arrays.

A processor 30 is arranged to receive the signals output by all of the detectors 24 and forms an X-ray re-construction engine arranged to process the detector signals. As the X-ray source points 12 are switched according to a pre-determined sequence, the detector signals are digitized and transmitted to the X-ray reconstruction engine 30 which produces a reconstruction of the object 20 that is present in the beam. It is advantageous to select a sequence of X-ray source point activation which maximises the quality of the reconstructed image. The reconstruction engine 30 produces from the detector signals one image data set for each activation of each source point 12. Each source point is activated once in each of a series of scan cycles. The data sets for one cycle can be combined to generate a three dimensional image of a slice of the item, and a series of such image data sets built up as the item moves through the scanner in the Z-direction can be built up into a full three dimensional image data set of the item. Also the data sets from one source point collected as the item moves through the scanner can be built up to form a two-dimensional image data set of the item.

An exemplary sequence provides X-ray emission from sources points that rotate around the conveyor and object under inspection in a plane substantially perpendicular to the direction of motion of the conveyor and object under inspection. For example there may be four source points, which may be equally spaced around the Z axis. Of course, other scanning sequences may be adopted as required to optimise the image reconstruction method.

It is generally reasonable to consider an optimization of the X-ray imaging system to the activity for which the system is to be deployed. With specific reference to X-ray screening of baggage and cargo items, it is highly advantageous to achieve equal resolution in all three dimensions. This substantially assists in the detection of materials that may be conformed into sheet-like structures. Further, it is highly advantageous to achieve this equally matched resolution at high conveyor speeds, for example in the range 0.25 m/s to 1 m/s.

In the embodiment described with reference to Figures 1 and 2, a motionless X-ray imaging system is able to generate reconstructed three-dimensional X-ray images with a conveyor speed of 0.25 m/s to 1.0 m/s, corresponding to a throughput of 800 to 3000 items per hour with equal spatial resolution in all dimensions (2mm and better) with a reconstructed pixel size of 1.5 mm x 1.5 mm x 1.5 mm or less with a reconstructed image signal-to-noise ratio of 50 or better, and typically in excess of 100, with no more than eight rings of X-ray detectors.

Advantageously, an X-ray system of this type may be further optimized to deliver a spatial resolution in the scan direction (parallel to the conveyor) whose spatial resolution exceeds that of the in-plane spatial resolution (perpendicular to the plane of the conveyor). In one embodiment, the X-ray scanner of the present invention is optimized to deliver image resolution in the scan direction that is at least 90% as high as in one direction, and in some cases two directions, orthogonal to the scan direction. In another embodiment, for a three dimensional image the resolution in the scan direction may be at least 90% as high, or may be as high in the scan direction as the average of the resolutions in two other orthogonal directions. In alternate embodiments the resolution in the scan direction may be higher, for example at least 20% or in some cases 50 % higher, than the resolution in one, or two, other orthogonal directions. Again, the resolution in the scan direction may be substantially equal to the resolution in the other two directions. For example the resolutions may all be within 10% of each other, and preferably within 5% of each other in further embodiments.

X-ray image may have a resolution in at least two directions, the scan direction ($R_1$) and a direction orthogonal to the scan direction ($R_2$). In some embodiments of the present invention, $R_1 \geq (0.90)*R_2$. In some cases $R_1 \geq R_2$.

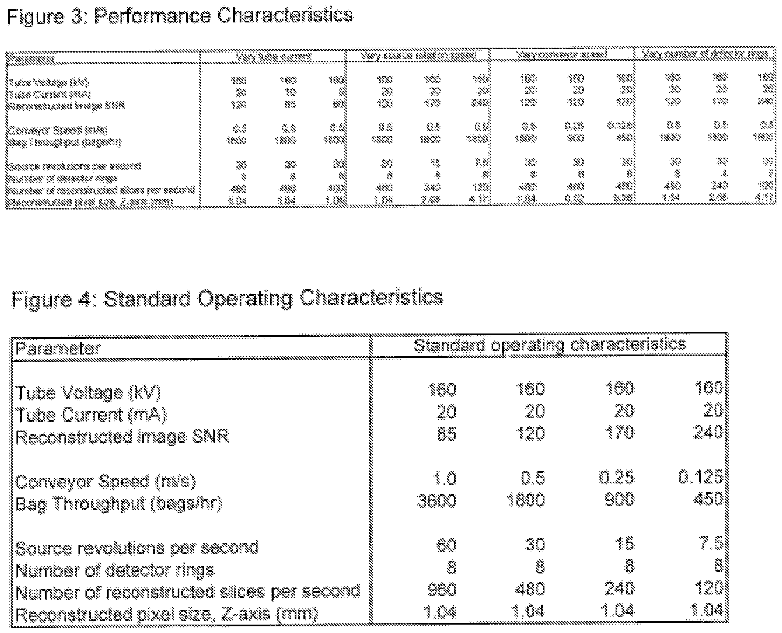

Figure 3 provides exemplary, but not limiting, performance characteristics for an X-ray scanner of the type shown in Figures 1 and 2. These figures are provided as an example of the performance of a system that has been optimized for the purpose of screening baggage and cargo items. In other embodiments the tube voltage may be in the range from 100kV to 200kV, and preferably in the range from 150kV and 180kV. The tube current can be in the range from 2 and 30 mA, but preferably in the range from 4 to 25mA, or in the range from 5 to 20mA as in the examples shown. The number of reconstruction slices per second may be at least 100, and may be in the range from 100 to 1000, and preferably at least 200. In some cases at least 300 or at least 400 may be needed.

It shall be understood by one skilled in the art that the reconstructed image signal-to-noise figures are affected by the design of the X-ray sensor (for example by the sensor area, by the sensor detection efficiency, by the noise of the associated readout electronics and by timing jitter in the switching of the X-ray source points and the data acquisition system), and that the information presented in this regard in Figure 3 is for one particular detector configuration only.

Generally, it is understood that the in-plane reconstructed pixel size shall be determined based on overall acceptable data rate at the output of the image reconstruction process and on the spatial resolution of the imaging data based on the optimised sensor configuration. A suitable reconstructed pixel size to match the system performance characteristics as shown in Figure 3 is in the range 1 mm to 2 mm and typically 1.2 mm x 1.2mm.

It is further possible to establish suitable operating characteristics for operation of an X-ray imaging system with varying conveyor speed. As described in Figure 4, a set of exemplary, but not limiting, operating characteristics for a particular system optimisation show operation of the system with conveyor speeds from 1 m/s to 0.125 m/s. Here, the optimization seeks to maintain an identical spatial resolution and an associated reconstructed pixel dimension 1.04 mm in the scan direction independent of conveyor speed without changing the sensor configuration. This is achieved by adjusting the scan frequency, i.e. the frequency of the scan cycles, in proportion to the speed of the conveyor. In one embodiment the conveyor speed is at least 0.1m/s, or at least 0.5m/s, or at least 1.0m/s. According to the invention, the tube current is controlled so that it varies in direct proportion to the conveyor speed. This can provide a constant signal-to-noise ratio which is independent of scan speed. For example if the scan speed is doubled then the tube current would be doubled, and if the scan speed is halved the tube current is also halved.

Such a practical optimization allows the performance of the X-ray system to be altered dynamically based on imaging load. At times when high throughput is required, the conveyor speed may be set to a fast speed with a reduction in reconstructed image signal to noise ratio. At times of low throughput, the conveyor speed may be reduced to a lower speed with an associated improvement in reconstructed image signal-to-noise ratio.

According to an aspect of the present invention, the image quality for the X-ray scanner of the present invention as shown in Figures 1 and 2, is optimized with respect to a set of parameters. For image quality estimation and optimization, X-ray spectrum emitted by the X-ray source is propagated to an X-ray detector of suitable size, location and composition for detection of primary X-ray beam from the source. In one embodiment, the X-ray detector used is a scintillation detector with photodiode electronics readout system.

## Signal-to-noise ratio (SNR)

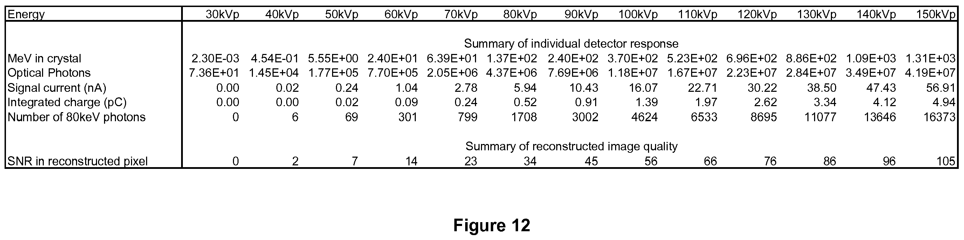

For the X-ray scanner of the present invention, Figure 12 is a table showing exemplary, but not limiting, operating characteristics for the X-ray source operating at 20mA with an 800mm diameter reconstruction circle, an 8-ring X-ray detector array and a reconstructed scan rate of 240 slices per second. It is observed from the data of Figure 12 that the reconstructed image signal-to-noise ratio (SNR) is strongly dependent on tube voltage. The higher the tube voltage, the better the reconstructed image signal-to-noise ratio (SNR).

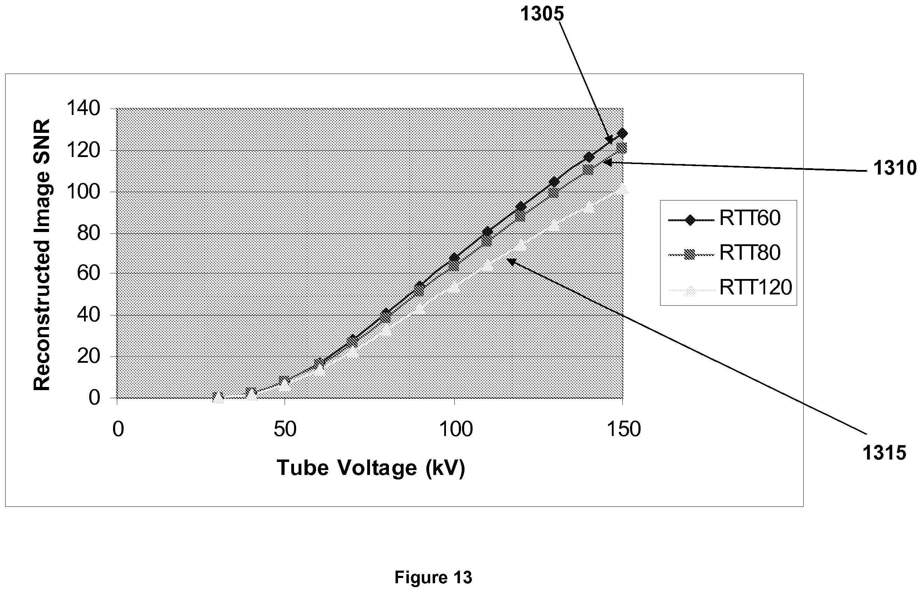

Figure 13 shows variation of reconstructed signal-to-noise ratio with respect to tube voltage for the X-ray scanner of the present invention when operated with a beam current of 20mA and a reconstruction rate of 240 frames per second with 8 detector rings for reconstructed image diameters of 60cm (1305), 80 cm (1310) and 120cm (1315) each with 1mm x 1mm x 1mm reconstructed voxel dimension. Persons of ordinary skill in the art would appreciate that a 1mm x 1mm x 1mm voxel size suits security inspection applications while a signal-to-noise ratio of over 100 provides the level of quantitative image that is required in many practical applications.

Accordingly the X-ray scanner of Figures 1 and 2 of the present invention is optimized for signal-to-noise by aiming for a balance in cost, complexity and performance. In one embodiment, the scanner is optimized to generate an image data set having a signal to noise ratio of at least 60, or at least 80, or at least 100. The image is made up of voxels having a size in the scan direction of 5mm or less, or 4mm or less, or 3mm or less, or 2mm or less, or 1.1mm or less. The image voxels have a size in the two directions orthogonal to the scan direction which is 5mm or less, or 4mm or less, or 3mm or less, or 2mm or less, or 1.1mm or less.

In one embodiment the X-ray scanner of the present invention provides a motionless X-ray imaging system able to generate reconstructed three-dimensional X-ray images with a conveyor speed of 0.25 m/s to 1.0 m/s, corresponding to a throughput of 800 to 3000 items per hour with equal spatial resolution in all dimensions (2mm and better) with a reconstructed pixel size of 1.5 mm x 1.5 mm x 1.5 mm or less with a reconstructed image signal-to-noise ratio of 50 or better, and typically in excess of 100, with no more than eight rings of X-ray detectors.

## Contrast

Contrast in the X-ray scanner of the present invention is defined as 1/SNR, where SNR is signal-to-noise ratio. Referring Figure 12, in one embodiment, at 150 kVp the contrast that may be resolved in an open field image is determined as (1/105) x 100% = 0.95%. The smaller this number is the better the contrast resolution of the imaging system. Persons of ordinary skill in the art should note that contrast in a region containing an object which attenuates an X-ray beam will be less than in an open field region since the number of X-ray photons that penetrate through that region will be less than in an open field region.

## Dynamic range

Dynamic range is defined as (full-scale signal) / (dark noise). The dark noise is obtained by switching off the X-ray source while leaving the detectors and image reconstruction system active. If this dark level is normalized to zero and the light level (i.e. that intensity which is reconstructed with the X-ray beam switched on with no object in the beam) is normalized to 1000, the dynamic range is equal to 1000 / (standard deviation in the dark image). An optimized X-ray scanner of the present invention, in one embodiment, provides a reconstructed dark noise of the order of 0.1% of full scale or less, thereby resulting in a dynamic range of 1000 or more.

The overall X-ray scanner dynamic range is dependent on the noise of the electronics readout system used. Thus, the noisier the electronics readout system, the worse the overall scanner dynamic range. Electronics readout system noise depends at least on the design of the photodiode, on the layout and length of the signal traces that lead from the photodiode sensors, on the design of the input electronics stage and on the resolution of the analogue-to-digital converter that follows its front end amplifier.

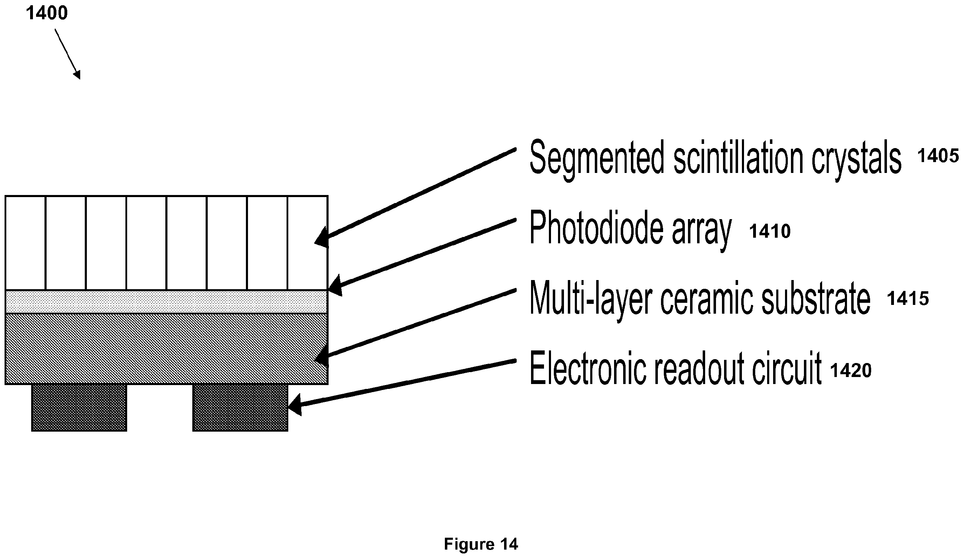

To achieve a wide dynamic range, the X-ray scanner of the present invention uses a scintillation detector 1400 with photodiode electronics readout as shown in Figure 14. In one embodiment, the individual segmented scintillation crystals 1405 of the scintillation detector 1400 are glued together with tungsten foil septa. The tungsten septa prevent optical cross-talk between individual crystals. The septa stop energetic Compton recoil and photoelectrons transferring signal between adjacent scintillation crystals to reduce cross-talk between adjacent crystals.

A reverse illuminated photodiode array 1410 with thin common cathode entrance window is adhered, glued, or otherwise attached to the base of the scintillation crystal array 1405. Optical photons from the scintillator 1405 pass through a thin optical coupling, further through a thin passivation/contact layer in the photodiode and into the bulk region of the photodiode. Charge generated in the depletion region drift under the influence of an applied bias towards a set of anodes - one anode contact region per scintillation crystal. The anode is advantageously constructed so as to minimize cross-talk of drift electrons from one pixel to another. The photodiode array 1410 is then bump bonded to a patterned substrate 1415 using, for example, a conductive epoxy pad on an indium bump bond with backfill of adhesive to ensure good adherence of the photodiode/crystal array to the substrate 1415.

The multi-layer ceramic substrate 1415 is advantageously drilled, printed with conductive ink and fired at high temperature to produce a multi-layer circuit card with pads on one side that match the layout of anodes on the photodiode array 1410 and on the other side match the pads on suitable electronic readout circuits 1420. The thermal expansion coefficient of the ceramic substrate 1415 and photodiode 1410 are matched to provide good thermal stability during firing of the adhesives and during bump bonding.

The electronic readout circuit 1420 is advantageously either soldered or fixed to the ceramic substrate 1415 using conductive epoxy pads. A low density connector then takes electrical signals from the front-end electronics to subsequent signal processing circuitry. In this way, the scintillator detector 1400 has minimum trace lengths and hence low intrinsic capacitance which helps to maximise dynamic range of the X-ray scanner of the present invention.

## Linearity

Intrinsic linearity of an X-ray system depends on aspects such as filtering of the X-ray spectrum emitted from X-ray source, X-ray tube operating voltage, filtering of the X-ray beam prior to X-ray detectors and the material from which the X-ray detector is fabricated. Also, degradation of X-ray system linearity is caused by detection of X-rays which have scattered from the object under investigation and on X-rays which scatter from the components of the X-ray system itself.

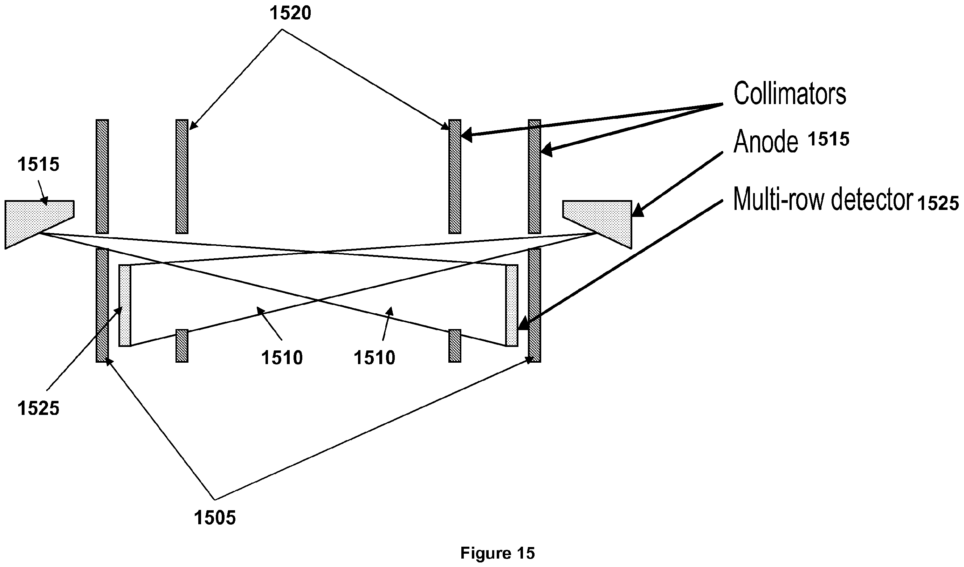

Therefore, the X-ray scanner of the present invention uses collimation and radiation shielding structures to reduce scatter. Figure 15 shows an embodiment of the shielding system used in the X-ray scanner of Figures 1 and 2 of the present invention. Figure 15 shows how the first set of collimators 1505 shield the primary beam 1510 as it is emitted from X-ray tube 1515 and how the second set of collimators 1520 again provide shielding before the beam 1510 reaches X-ray detectors 1525. In one embodiment of the optimized X-ray scanner of the present invention, a scatter fraction of the order of 1% is achieved in open field conditions.

The X-ray scanner optimized for low scatter also results in maximizing its contrast performance. The signal-to-noise ratio (SNR) of an X-ray system, the noise performance of which is dominated by X-ray photon noise, is defined as:

$$SNR = \frac{Mean}{S.D.} = \frac{\sigma^2}{\sigma} = \sigma$$

In other words, the signal-to-noise ratio (SNR) is simply the standard deviation of the photon signal.

However, in the presence of X-ray scatter, the situation is changed such that the standard deviation, $\sigma^2$, comprises noise due both to the primary signal as well as due to scatter:

$$SNR = \frac{\sigma^2}{\sigma + \sigma_S}$$

A scatter fraction of 1% of primary beam intensity results in a reduction of SNR by a similar amount. The distribution of scattered radiation at the detectors is approximately constant independent of position in the array for a given object density. Thus, the impact of scatter is more significant in high attenuation regions of an image than in low attenuation regions of an image.

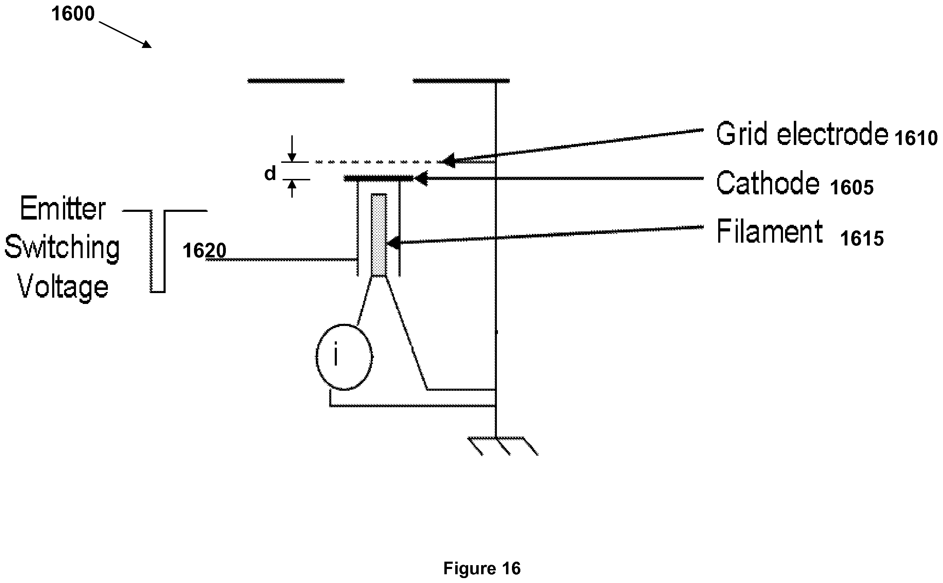

Therefore, to maximize imaging performance, the X-ray scanner of the present invention further uses a well controlled space charge limited electron gun 1600 as shown in Figure 16. As described earlier with reference to Figures 1 and 2, the X-ray scanner of the present invention utilizes a plurality of individual electron sources. To minimize variation between output source intensity of each electron gun, the X-ray scanner electron gun 1600 is operated in a space charge limited mode. Here, the electron emitter 1620 is operated with a high electron yield but the allowable emitted signal is determined by two controllable parameters: (a) geometry and (b) extraction field. In one embodiment, the two parameters are the only two parameters used to determine the allowable emitted signal.

Referring to Figure 16, it is observed that with a typical cathode 1605 to grid electrode 1610 distance 'd' of 0.5mm, a variation of the order of 20 μm in this distance 'd' leads to a variation in beam current of only a few percent. However, variation in electron gun brightness is strongly affected by variation in the tolerance in positioning of the filament 1615 within the cathode 1605, on the thickness of the filament wire and on the distribution of thermal packing that may exist around the filament 1615. Considering the aforementioned aspects, in one embodiment, the X-ray scanner of the present invention is optimized to achieve less than 5% variation in brightness between individual electron emitters/sources 1620.

**Thermal load on X-ray tube target**

Thermal load on X-ray tube target of the X-ray scanner of the present invention is minimized to allow high power operation over extended operating periods. As a first measure, this thermal load minimization is achieved by having a large, distributed, anode where only small sections of the anode are irradiated by an electron beam at any one time and that too only for very short durations. Still, for example, a distributed anode with an irradiation time of 80 μs per source point results in an increase in localized temperature at the central point of the electron irradiation spot by around 200 degrees.

Thus, as a second measure, a coolant fluid is passed around the anode such that the coolant is capable of extracting the total power that is driven into the anode (2.4 kW for a system operating at 160 kV, 20 mA). As a result, the anode is maintained at a temperature which is substantially constant over extended operating periods. The coolant fluid is selected to have good thermal transfer properties and low viscosity with a high ionisation threshold. Coolant flow rate is maintained to establish turbulent flow in the coolant pipe in order to maximise thermal transfer from the anode into the coolant fluid.

**Thermal load on X-ray detectors**

Scintillation efficiency of X-ray detectors as well as leakage current of photodiodes (when operated in reverse bias condition) of the detectors varies with temperature. Therefore, the X-ray scanner of the present invention provides cooling of its X-ray detectors to maintain a constant operating temperature independent of ambient conditions, thereby stabilizing the reconstructed voxel values resulting in high quantitative accuracy of X-ray image.

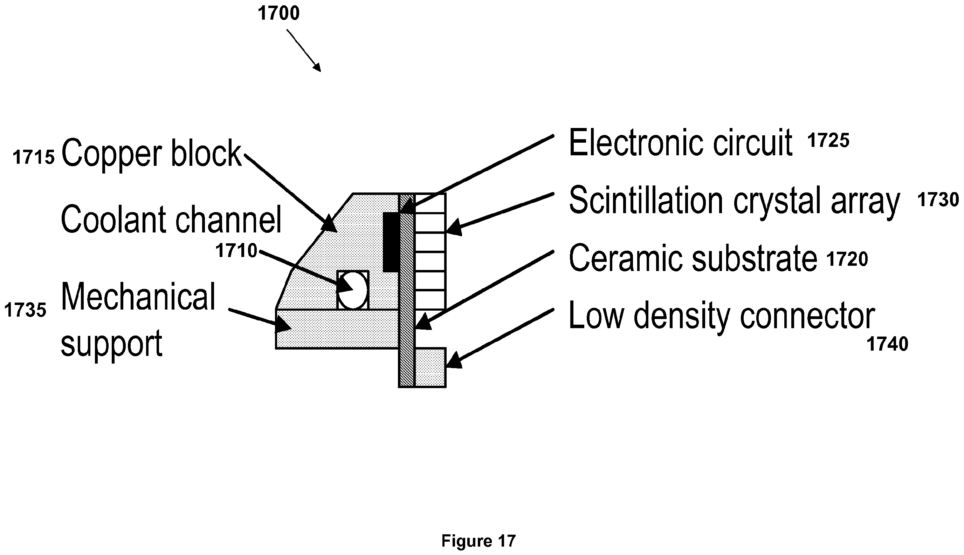

Figure 17 shows an embodiment of the cooling system for controlling temperature of detectors 1700 of the X-ray scanner of the present invention. As shown, a coolant channel 1710 is interfaced with a copper block 1715 that has high thermal conductivity supported using mechanical support 1735. Readout electronics 1725, located at the back of ceramic substrate 1720 is placed in a recess in the copper block 1715 and is thermally connected to the cooled copper block 1715 using a suitable heat sinking compound with high thermal conductivity. The ceramic substrate 1720 is then placed in direct contact with the copper block 1715, again using a suitable heat sink compound to maximize thermal connection between the ceramic substrate 1720 and the copper block 1715. Since ceramic materials, such as high density alumina, have good thermal properties therefore the photodiode and crystal 1730 are maintained at a temperature which is close to that of the copper block 1715. The entire detector assembly 1700 is placed within a light tight, electrically conductive and environmentally sealed enclosure, such as one fabricated using carbon fibre composite materials, and includes a low density connector 1740. By controlling the temperature of the coolant fluid within a range of ±1 degree, a similar level of temperature control is maintained at the detector. This thermal control results in high level of stability of the reconstructed image, and typically better than 0.1%.

Referring back to Figures 1 and 2, in some situations, such as for maintenance or for the purposes of passing a specific regulatory performance requirement, it can be beneficial to constrain the switching of the source points 12 in the X-ray system to a sequence that is suited to other imaging methods. As an example, a single one of the source points 12 may be switched on continuously without any further source points in the scanning sequence. In this case, as the conveyor 22 scans past the stationary X-ray fan-beam, a two-dimensional image data set is built up, from which a two dimensional image can be generated.

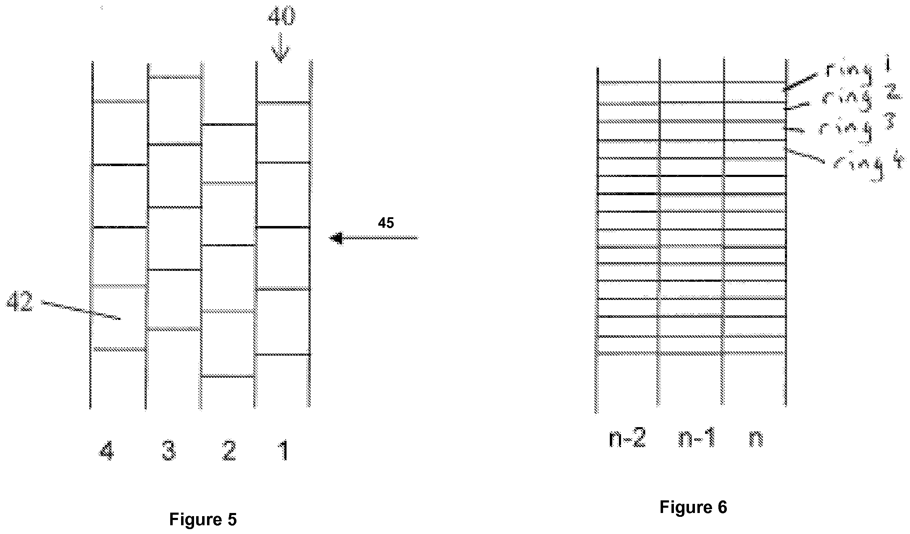

As an enhancement of this application, the detector rings may be configured as shown in Figure 5. By way of example, a sensor with four detector rings 40 is shown in which the centre of the detectors 42 in each ring is shifted by ¼ of a detector spacing with reference to its adjacent rings. Data is collected from each ring 40 of sensors after the conveyor has moved a distance equal to the width of one sensor ring in the scan direction 45. Referring to Figure 6, image data from ring 1 is then interposed with data from ring 2 after one time slice, with data from ring 3 after two time slices and with data from ring 4 after three time slices and the combined data is used to provide one line of the two-dimensional projected image. Note that the vertical pixel sampling rate is in the two dimensional image is in this example four times better than the horizontal pixel sampling rate.

An improvement in horizontal pixel sampling rate can also be achieved by sampling more rapidly with respect to the conveyor velocity than just by sampling once every one detector spacing, i.e. by performing more than one scan cycle in the time taken for the object to move a distance equal to the width of the detector ring 40 of Figure 5.

In a related scanning mode, a sequence may be generated in which X-ray tube source points are activated over a small range of angles, typically over 10 degrees, at a rate such that all of the chosen source points are activated individually in the time taken for the conveyor to travel one detector spacing. For a detector dimension of 5 mm, a source point located every 1 degree and a conveyor speed of 0.5 m/s, each individual projection will be collected in 1 ms. In this way, a set of two-dimensional projection images are acquired, one for each selected source point.

A graphical user interface may then be provided which enables the operator to view each image in turn under control of a suitable input device such as a mouse or a pair of buttons, and to rapidly flip between images from adjacent source points as the input device is actuated. The result is a "rocking two-dimensional image" in which the object under inspection appears to rotate back and forth about the central axis of the scanning tunnel in the direction parallel to the conveyor motion under the control of the operator. This rocking image provides a powerful method by which the operator can easily perceive depth information about objects within the object under inspection.

It is clear that the data for the above two scanning modes exists within the data set that is typically collected during data acquisition for a three-dimensional tomographic image reconstruction in the system of Figure 1, and this two-dimensional image data can advantageously be displayed alongside the full three-dimensional data set.

A high speed three-dimensional X-ray scanning system as described with reference to Figures 1 and 2 can be deployed for screening baggage and cargo in these, and a number of other ways.

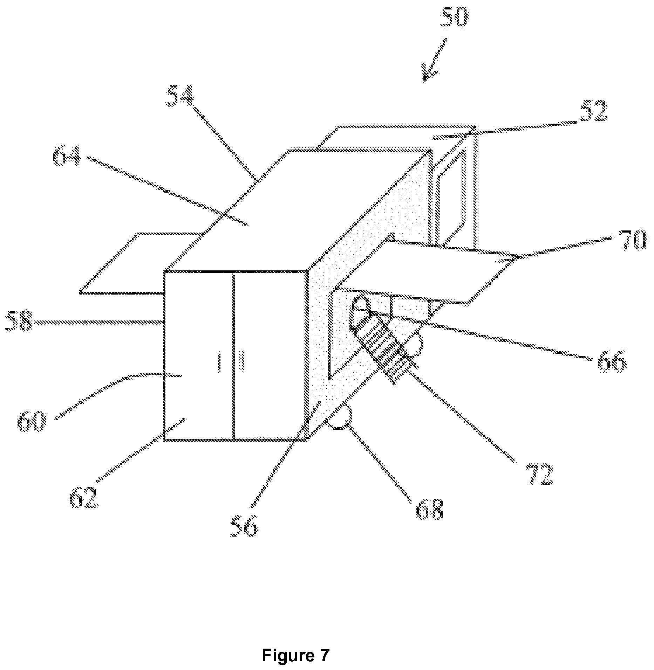

Figure 7 shows a high speed 3D X-ray scanning system, such as that of Figure 1, located in a vehicle 50 according to a further embodiment of the invention. Due to the lack of moving parts in this X-ray system, it is practical to locate the equipment within a vehicular platform within which the equipment is subject to significant mechanical shock. Such shock does not mechanically misalign the X-ray system which is a common failing of known systems.

The scanning equipment is very compact due to the lack of a mechanical gantry to rotate the source and detector assembly as is required in known X-ray tomography systems. The scanning equipment is of low power consumption compared to known mechanical X-ray tomography systems due to the lack of motor drive components.

In this mobile configuration, the vehicle 50 includes a cab 52 and a body 54 which has two side walls 56, 58, a rear end 60 having doors 62 therein, and a roof 64. Each of the side walls 56, 58 has an aperture 66 in it and a scanner, such as that of Figure 1, is located within the vehicle body 54. One end of the conveyor is located close to one of the apertures 66 which forms an input aperture, and the other end of the conveyor is located close to the other aperture which forms an exit aperture. The X-ray scanner is advantageously located close to the back wheels 68. Side panels 70 are hingedly attached to each of the two side walls of the vehicle, one over each of the apertures 66, which can be opened to expose the scanning tunnel entrance and exit. Additional input and exit conveyors 72 are provided and removably connectable to the sides of the vehicle. These conveyors can be ramped to allow baggage and cargo to be loaded into the scanner and unloaded from a safe height (typically less than 1.2m) with some protection from the weather afforded by the open side panels 70 which can be supported in an open condition so as to extend over, and thereby cover, the input and exit conveyors 72.

An operator inspection workstation can be located adjacent to the driver in the cab 52 at the front of the vehicle or adjacent to the equipment itself in the body 54 at the rear of the vehicle.

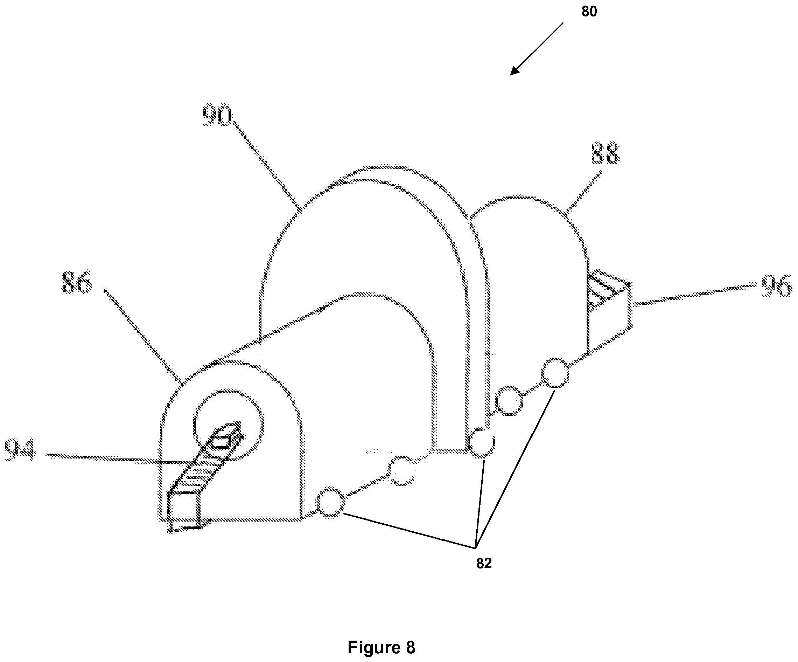

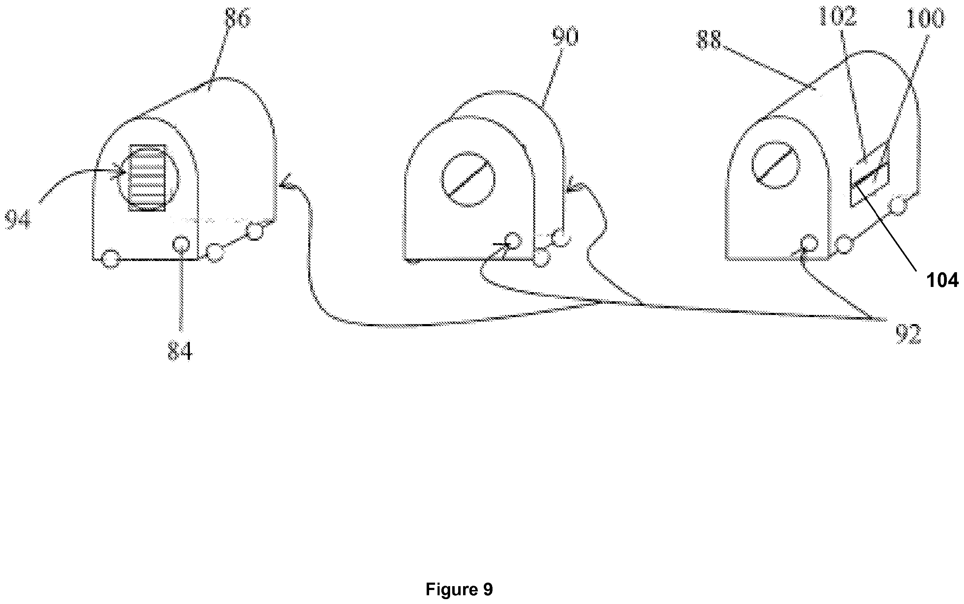

In a further embodiment of the invention, the X-ray system may be constructed on a wheelable chassis as shown in Figures 8 and 9, where Figure 9 is an exploded view of the chasis of Figure 8. Referring now to Figures 8 and 9 simultaneously, the chassis 80 includes lockable wheels 82. When the wheels are unlocked, the system may be wheeled easily from one location to another. When at its new location, the unit can be fixed in position by locking its wheels 82. A mains power cable 84 is used to obtain electrical power from a power outlet adjacent to the chosen scanning site.

To allow the system 80 to be moved between various levels of a building, the scanner may be easily and quickly separated into three parts: an inlet tunnel section 86, an exit tunnel section 88 and a scanner section 90 as shown in Figure 9, to allow it to be moved from one level in the building to another using an elevator. Each section is designed to be self contained and electrical connectors 92 are provided on both sides of the scanner section 90 and on the inner end of each of the other sections 86, 88, making the system connectorized such that when the three sections are brought together, electrical connectors on adjoining electrical interface plates mate to render the system functional.

To save space, in-feed and out-feed conveyor sections 94, 96 fold up to a stowed position against the front face of their respective tunnel sections 86, 88 and can be dropped back down into an in-use position once the system has been manoeuvred to its required location.

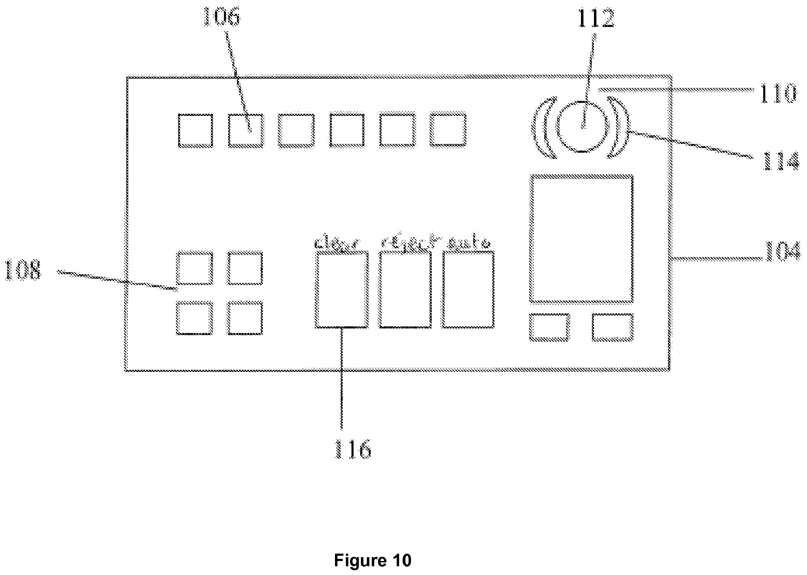

An operator workstation 100 is also advantageously located on one or more of the tunnel sections 86, 88 such that the necessary computer monitor 102 and keyboard assembly 104 are arranged to fold down from the equipment itself in order to minimise cabling and to minimise down time between system relocation. Referring to Figure 10, keyboard 104 which may be provided with the system, but may be used in other suitable systems, makes interaction with the X-ray image straightforward. The image can be displayed on the computer monitor and manipulated by means of the keyboard 104.

In one embodiment, the keyboard 104 of Figure 10 comprises a plurality of dedicated view select buttons 106 each of which the operator may use to bring up a standard view of the item under inspection. Standard views include a 2D projection image, a 3D interactive image, one or more pre-rendered 3D views from standard orientations and/or a rocking 2D image. A second group of buttons 108 allow the operator to select from a group of look-up tables for image colouring. Example look-up tables include greyscale (black to white), inverse greyscale (white to black), pseudo colour and materials specific colours based on dual energy materials discrimination and X-ray scatter imaging. A further group of controls 110 allow the user to interact with the image data using a trackball 112 and select buttons 114 or a track-pad and select buttons depending on user preference. A final group of buttons 116 allow the used to mark the image as being clear following inspection, to mark the image as being rejected following inspection, and to run an automated sequence of image displays which show image data for the item under inspection in a standardised preset sequence of views as a mixture of static 3D rendered images and one or more dynamic 3D rendered views.

Referring back to Figure 9, typically, a single image display monitor 102 is used in order to view the X-ray image data. In some situations, a second computer monitor may be provided in order to show information about a related network of X-ray systems and other data relevant to the article under inspection such as passenger data, manifest data, destination of the article under inspection, shipping agent and carrier.

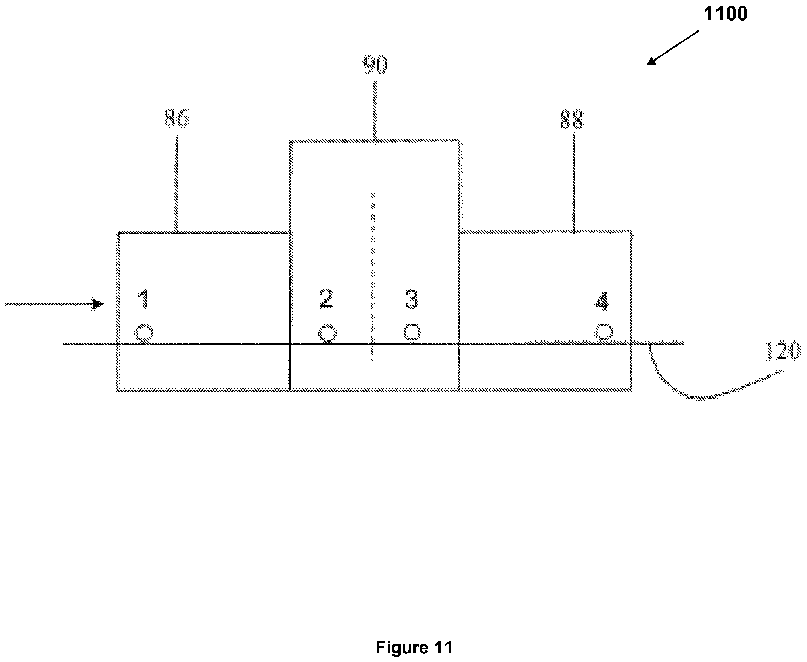

Referring now to Figure 11, in this embodiment of the present invention, the X-ray system 1100 is provided with audible and visible alarms. The use of audible alarms is minimised to prevent excess noise in the operating environment, however audible sounders are provided to indicate if an object has become stuck within the system. Visual alarms are provided to indicate when the X-ray beam is turned on and when the X-ray beam is turned off. The system 1100 is provided with means to turn the X-ray beam on and off automatically depending on whether an item is present to be inspected or not. This is achieved simply and inexpensively through the use of sensors, such as infra-red sensors 1 through 4, which are located at suitable positions along the length of the conveyor 120 as shown in Figure 11. In this case there are two sensors in each tunnel section 86, 88 located at different distances from the scanner image volume. Sensors 1 and 2 are in the inlet tunnel section 86, with sensor 1 further from the scanner, and Sensors 3 and 4 are located in the exit tunnel section 88 with sensor 4 further from the scanner. When an object enters the inspection tunnel in the section 86, it breaks light beam 1. The object continues to move down the tunnel until it reaches Sensor 2. Sensor 1 continues to measure the length of the bag, the length being determined at the point when the output of Sensor 1 returns to normal. When Sensor 2 sees the object, it turns on the X-ray beam. The X-ray beam is kept on until the trailing edge of the object passed through Sensor 3 at which point the X-ray beam will be turned off unless a second object is about to pass Sensor 2. In this case, the beam is kept on until the second object has been scanned. Sensor 4 assists the transfer of the object out from the X-ray system 1100 to a following baggage handling system or other cargo handling system. Further visual indicators warn of the status of safety interlocks, of electrical power and other machine parameters as appropriate.

In one embodiment, the X-ray system 1100 is also provided with a Human Machine Interface. This comprises a video screen through which is provided dynamic status information on the scanning process (including the locations of objects to be scanned within the system), statistical information on the quantity and type of objects scanned together with inspection results and machine status information including software and hardware revision levels, electrical, computational, X-ray and sensor subsystem status indication. In one embodiment, the Human Machine Interface is advantageously provided with a touch screen interface, as is known to those of ordinary skill in the art, with the requirement for an operator to enter a security code in order to access some elements of the available information.

## Claims

1. An X-ray scanner comprising: X-ray source means (12) arranged to emit X-rays through an imaging volume from a plurality of X-ray tubes (10) configured into a substantially circular arrangement around an axis of the scanner, each tube containing an X-ray source point (12); an array of X-ray detectors (24, 26) arranged around the imaging volume and arranged to output detector signals in response to the detection of X-rays; conveying means (22) arranged to convey an object (20) through the imaging volume in a scan direction; processing means arranged to process the detector signals to produce an image data set defining an image of the object; a control means (18) arranged to activate the source points (12) in a predetermined sequence once in each of a sequence of scan cycles; **characterized in that** the control means (18) is arranged to control the frequency of the scan cycles, and is arranged to adjust the frequency of the scan cycles so as to provide a constant resolution in the scan direction for a plurality of object speeds, and wherein the control means is arranged to control the current of the X-ray tubes (10) so that the current varies in direct proportion to the speed of the conveying means (22).

2. A scanner according to claim 1 wherein the source points (12) are arranged in a plane perpendicular to the scan direction.

3. A scanner according to any foregoing claim wherein the detectors (24, 26) of the array are located in a common plane which is perpendicular to the scan direction.

4. A scanner according to any foregoing claim wherein the detector array is offset from the source points (12) in the scan direction.

5. A scanner according to any foregoing claim wherein the detector array is at least two detectors (24, 26) wide in the scan direction.

6. A scanner according to claim 5 wherein the detectors (24, 26) are arranged in a plurality of rings, the rings being in respective planes and the planes are spaced from each other in the scan direction.

7. A scanner according to any of claims 5 and 6 wherein the detectors (24, 26) have a width in a circumferential direction and each detector is offset in the circumferential direction from one adjacent to it in the scan direction.

8. A scanner according to claim 7 wherein each detector (24, 26) has a width in the circumferential direction and the offset is less than the width.

9. A scanner according to claim 1 wherein the control means (18) is arranged to control the frequency of the scan cycles so that it takes an integer number of scan periods for the object (20) to move a distance in the scan direction equal to the spacing of the detectors in the scan direction.

10. A scanner according to claim 9, wherein the integer is greater than 1.

11. A scanner according to any foregoing claim wherein the conveying means is arranged to convey the object at a speed of at least 0.1m/s, or at least 0.5m/s, or at least 1.0m/s.

12. A scanner according to any foregoing claim arranged to generate an image data set having a signal to noise ratio of at least 50, or at least 80, or at least 100.

13. A scanner according to any foregoing claim wherein the image is made up of voxels having a size in the scan direction of 5mm or less, or 4mm or less, or 3mm or less, or 2mm or less, or 1.1mm or less.

14. A scanner according to claim 13 wherein the image voxels have a size in the two directions orthogonal to the scan direction which is 5mm or less, or 4mm or less, or 3mm or less, or 2mm or less, or 1.1mm or less.

15. A scanner according to any of claims 1 to 14 which is able to generate reconstructed three-dimensional X-ray images with a conveyor speed of 0.25 m/s to 1.0 m/s, corresponding to a throughput of 800 to 3000 items per hour with equal spatial resolution in all dimensions (2mm and better) with a reconstructed pixel size of 1.5 mm x 1.5 mm x 1.5 mm or less with a reconstructed image signal-to-noise ratio of 50 or better, and typically in excess of 100, with no more than eight rings of X-ray detectors.

16. A scanner according to any of claims 1 to 15 wherein the X-ray sources (12) and the detectors (24, 26) are stationary.

**Patentansprüche**

1. Röntgenscanner, umfassend: Röntgenquellenmittel (12), die dazu eingerichtet sind, Röntgenstrahlen durch ein Bildgebungsvolumen aus einer Vielzahl von Röntgenröhren (10), die in einer im Wesentlichen kreisförmigen Anordnung um eine Achse des Scanners konfiguriert sind, zu emittieren, wobei jede Röhre Folgendes enthält: einen Röntgenquellenpunkt (12); eine Anordnung von Röntgendetektoren (24, 26), die um das Bildgebungsvolumen angeordnet sind und dazu eingerichtet sind, Detektorsignale als Reaktion auf die Detektion von Röntgenstrahlen auszugeben; Fördermittel (22), die dazu eingerichtet sind, ein Objekt (20) in einer Scanrichtung durch das Bildgebungsvolumen zu befördern; Verarbeitungsmittel, die dazu eingerichtet sind, die Detektorsignale zu verarbeiten, um einen Bilddatensatz zu erzeugen, der ein Bild des Objekts definiert; ein Steuermittel (18), das dazu eingerichtet ist, die Quellenpunkte (12) in einer vorgegebenen Abfolge einmal in jeder Abfolge von Scanzyklen zu aktivieren; **dadurch gekennzeichnet, dass** das Steuermittel (18) dazu eingerichtet ist, die Frequenz der Scanzyklen zu steuern, und dazu eingerichtet ist, die Frequenz der Scanzyklen einzustellen, um eine konstante Auflösung in der Scanrichtung für eine Vielzahl von Objektgeschwindigkeiten bereitzustellen, und wobei das Steuermittel dazu eingerichtet ist, den Strom der Röntgenröhren (10) zu steuern, so dass der Strom direkt proportional zur Geschwindigkeit der Fördermittel (22) variiert.

2. Scanner nach Anspruch 1, wobei die Quellenpunkte (12) in einer Ebene senkrecht zur Scanrichtung angeordnet sind.

3. Scanner nach einem vorhergehenden Anspruch, wobei die Detektoren (24, 26) der Anordnung sich auf einer gemeinsamen Ebene befinden, die senkrecht zur Scanrichtung verläuft.

4. Scanner nach einem vorhergehenden Anspruch, wobei die Detektoranordnung in der Scanrichtung von den Quellenpunkten (12) versetzt ist.

5. Scanner nach einem vorhergehenden Anspruch, wobei die Detektoranordnung in der Scanrichtung mindestens zwei Detektoren (24, 26) breit ist.

6. Scanner nach Anspruch 5, wobei die Detektoren (24, 26) in einer Vielzahl von Ringen angeordnet sind, wobei sich die Ringe in jeweiligen Ebenen befinden und die Ebenen in der Scanrichtung voneinander beabstandet sind.

7. Scanner nach einem der Ansprüche 5 und 6, wobei die Detektoren (24, 26) eine Breite in einer Umfangsrichtung aufweisen und jeder Detektor in der Umfangsrichtung von einem zu ihm benachbarten in der Scanrichtung versetzt ist.

8. Scanner nach Anspruch 7, wobei jeder Detektor (24, 26) eine Breite in der Umfangsrichtung aufweist und der Versatz kleiner ist als die Breite.

9. Scanner nach Anspruch 1, wobei das Steuermittel (18) dazu eingerichtet ist, die Frequenz der Scanzyklen so zu steuern, dass das Objekt (20) eine Ganzzahl von Scanperioden benötigt, um eine Strecke in der Scanrichtung zurückzulegen, die gleich dem Abstand der Detektoren in der Scanrichtung ist.

10. Scanner nach Anspruch 9, wobei die Ganzzahl größer als 1 ist.

11. Scanner nach einem vorhergehenden Anspruch, wobei das Fördermittel dazu eingerichtet ist, das Objekt mit einer Geschwindigkeit von mindestens 0,1 m/s oder mindestens 0,5 m/ oder mindestens 1,0 m/s zu befördern.

12. Scanner nach einem vorhergehenden Anspruch, der dazu eingerichtet ist, einen Bilddatensatz zu erzeugen, der ein Signal-Rausch-Verhältnis von mindestens 50 oder mindestens 80 oder mindestens 100 aufweist.

13. Scanner nach einem vorhergehenden Anspruch, wobei das Bild aus Voxeln mit einer Größe in Scanrichtung von 5 mm oder weniger oder 4 mm oder weniger oder 3 mm oder weniger oder 2 mm oder weniger oder 1.1 mm oder weniger besteht.

14. Scanner nach Anspruch 13, wobei Bildvoxel eine Größe in den zwei zur Scanrichtung orthogonalen Richtungen aufweisen, die 5 mm oder weniger oder 4 mm oder weniger oder 3 mm oder weniger oder 2 mm oder weniger oder 1,1 mm oder weniger beträgt.

15. Scanner nach einem der Ansprüche 1 bis 14, der dazu fähig ist, rekonstruierte dreidimensionale Röntgenbilder mit einer Fördergeschwindigkeit von 0,25 m/ bis 1,0 m/s zu erzeugen, was einem Durchsatz von 800 bis 3000 Artikeln pro Stunde mit gleicher räumlicher Auflösung in allen Dimensionen (2 mm und besser) mit einer rekonstruierten Pixelgröße von 1,5 mm x 1,5 mm x 1,5 mm oder weniger mit einem rekonstruierten Bildsignal-Rausch-Verhältnis von 50 oder besser und typischerweise über 100 mit nicht mehr als acht Ringen von Röntgendetektoren entspricht.

16. Scanner nach einem der Ansprüche 1 bis 15, wobei die Röntgenquellen (12) und die Detektoren (24, 26) stationär sind.

## Revendications

1. Scanner à rayons X comprenant : des moyens de sources de rayons X (12) agencés pour émettre des rayons X à travers un volume d'imagerie à partir d'une pluralité de tubes à rayons X (10) configurés selon un agencement sensiblement circulaire autour d'un axe du scanner, chaque tube contenant un point de source de rayons X (12) ; un réseau de détecteurs de rayons X (24, 26) agencés autour du volume d'imagerie et disposés pour délivrer des signaux de détecteurs en réponse à la détection des rayons X ; des moyens de transport (22) agencés pour acheminer un objet (20) dans le volume d'image dans une direction de balayage ; des moyens de traitement conçus pour traiter les signaux des détecteurs pour produire un ensemble de données d'image définissant une image de l'objet ; des moyens de commande (18) agencés pour activer les points de sources (12) suivant une séquence prédéterminée une fois par cycle dans une séquence de cycles de balayage ; **caractérisé en ce que** les moyens de commande (18) sont agencés pour commander la fréquence des cycles de balayage, et sont agencés pour ajuster la fréquence des cycles de balayage de manière à fournir une résolution constante dans la direction de balayage pour une pluralité de vitesses d'objet, et où les moyens de commande sont agencés pour contrôler le courant des tubes à rayons X (10) afin que le courant varie en proportion directe à la vitesse des moyens de transport (22).

2. Scanner selon la revendication 1, dans lequel les points de sources (12) sont disposés dans un plan perpendiculaire à la direction de balayage.

3. Scanner selon l'une quelconque des revendications précédentes, dans lequel les détecteurs (24, 26) du réseau sont situés dans un plan commun qui est perpendiculaire à la direction de balayage.

4. Scanner selon l'une quelconque des revendications précédentes, dans lequel le réseau de détecteurs est décalé par rapport aux points de sources (12) dans la direction de balayage.

5. Scanner selon l'une quelconque des revendications précédentes, dans lequel le réseau de détecteurs a au moins deux détecteurs (24, 26) de largeur dans la direction de balayage.

6. Scanner selon la revendication 5, dans lequel les détecteurs (24, 26) sont disposés suivant une pluralité d'anneaux, les anneaux se trouvant dans des plans respectifs et les plans étant espacés les uns des autres dans la direction de balayage.

7. Scanner selon l'une quelconque des revendications 5 et 6, dans lequel les détecteurs (24, 26) ont une certaine largeur dans une direction circonférentielle, et chaque détecteur est décalé dans la direction circonférentielle d'un détecteur qui lui est adjacent dans la direction de balayage.

8. Scanner selon la revendication 7, dans lequel chaque détecteur (24, 26) a une largeur dans la direction circonférentielle, et le décalage est inférieur à la largeur.

9. Scanner selon la revendication 1, dans lequel les moyens de commande (18) sont agencés pour contrôler la fréquence des cycles de balayage de manière à ce que l'objet (20) requière un nombre entier de périodes de balayage pour se déplacer, dans la direction de balayage, sur une distance égale à l'espacement des détecteurs dans la direction de balayage.

10. Scanner selon la revendication 9, dans lequel l'entier est supérieur à 1.

11. Scanner selon l'une quelconque des revendications précédentes, dans lequel les moyens de transport sont agencés pour acheminer l'objet à une vitesse d'au moins 0,1 m/s, ou d'au moins 0,5 m/s, ou d'au moins 1,0 m/s.

12. Scanner selon l'une quelconque des revendications précédentes, agencé pour générer un ensemble de données d'image ayant un rapport signal sur bruit d'au moins 50, ou d'au moins 80, ou d'au moins 100.

13. Scanner selon l'une quelconque des revendications précédentes, dans lequel l'image est constituée de voxels ayant une taille, dans la direction de balayage, de 5 mm ou moins, ou de 4 mm ou moins, ou de 3 mm ou moins, ou de 2 mm ou moins, ou de 1,1 mm ou moins.

14. Scanner selon la revendication 13, dans lequel les voxels d'image ont une taille dans les deux directions perpendiculaires à la direction de balayage qui est de 5 mm ou moins, ou de 4 mm ou moins, ou de 3 mm ou moins, ou de 2 mm ou moins, ou de 1,1 mm ou moins.

15. Scanner selon l'une quelconque des revendications 1 à 14 qui est capable de générer des images radiographiques tridimensionnelles reconstruites avec une vitesse de transport de 0,25 m/s à 1,0 m/s, correspondant à un débit de 800 à 3000 éléments par heure avec une résolution spatiale égale dans toutes les dimensions (2 mm et mieux) avec une taille de pixel reconstruite de 1,5 mm x 1,5 mm x 1,5 mm, ou moins, avec un rapport signal sur bruit d'image reconstruite égal ou supérieur à 50 et, typiquement, supérieur à 100, avec au maximum huit anneaux de détecteurs de rayons X.

16. Scanner selon l'une quelconque des revendications 1 à 15, dans lequel les sources de rayons X (12) et les détecteurs (24, 26) sont fixes.

Figure 1

**Figure 2**

Figure 3: Performance Characteristics

Figure 4: Standard Operating Characteristics

| Parameter | Standard operating characteristics | | | |
|---|---|---|---|---|
| Tube Voltage (kV) | 160 | 160 | 160 | 160 |
| Tube Current (mA) | 20 | 20 | 20 | 20 |
| Reconstructed image SNR | 85 | 120 | 170 | 240 |
| | | | | |
| Conveyor Speed (m/s) | 1.0 | 0.5 | 0.25 | 0.125 |
| Bag Throughput (bags/hr) | 3600 | 1800 | 900 | 450 |
| | | | | |
| Source revolutions per second | 60 | 30 | 15 | 7.5 |
| Number of detector rings | 8 | 8 | 8 | 8 |
| Number of reconstructed slices per second | 960 | 480 | 240 | 120 |
| Reconstructed pixel size, Z-axis (mm) | 1.04 | 1.04 | 1.04 | 1.04 |

Figure 6

Figure 5

**Figure 7**

Figure 8

Figure 9

EP 2 401 635 B1

Figure 10

Figure 11

EP 2 401 635 B1

| Energy | 30kVp | 40kVp | 50kVp | 60kVp | 70kVp | 80kVp | 90kVp | 100kVp | 110kVp | 120kVp | 130kVp | 140kVp | 150kVp |
|---|---|---|---|---|---|---|---|---|---|---|---|---|---|
| | | | | | Summary of individual detector response | | | | | | | | |
| MeV in crystal | 2.30E-03 | 4.54E-01 | 5.55E+00 | 2.40E+01 | 6.39E+01 | 1.37E+02 | 2.40E+02 | 3.70E+02 | 5.23E+02 | 6.96E+02 | 8.86E+02 | 1.09E+03 | 1.31E+03 |
| Optical Photons | 7.36E+01 | 1.45E+04 | 1.77E+05 | 7.70E+05 | 2.05E+06 | 4.37E+06 | 7.69E+06 | 1.18E+07 | 1.67E+07 | 2.23E+07 | 2.84E+07 | 3.49E+07 | 4.19E+07 |
| Signal current (nA) | 0.00 | 0.02 | 0.24 | 1.04 | 2.78 | 5.94 | 10.43 | 16.07 | 22.71 | 30.22 | 38.50 | 47.43 | 56.91 |
| Integrated charge (pC) | 0.00 | 0.00 | 0.02 | 0.09 | 0.24 | 0.52 | 0.91 | 1.39 | 1.97 | 2.62 | 3.34 | 4.12 | 4.94 |
| Number of 80keV photons | 0 | 6 | 69 | 301 | 799 | 1708 | 3002 | 4624 | 6533 | 8695 | 11077 | 13646 | 16373 |
| | | | | | Summary of reconstructed image quality | | | | | | | | |
| SNR in reconstructed pixel | 0 | 2 | 7 | 14 | 23 | 34 | 45 | 56 | 66 | 76 | 86 | 96 | 105 |

**Figure 12**

Figure 13

EP 2 401 635 B1

**1400**

Segmented scintillation crystals **1405**

Photodiode array **1410**

Multi-layer ceramic substrate **1415**

Electronic readout circuit **1420**

Figure 14

EP 2 401 635 B1

1520

Collimators

Anode 1515

1515

Multi-row detector 1525

1510    1510

1525

1505

EP 2 401 635 B1

**Figure 15**

1600

Grid electrode 1610

Cathode 1605

Filament 1615

d

1620

Emitter Switching Voltage

Figure 16

1700

1715 Copper block

Coolant channel

1710

1735 Mechanical support

Electronic circuit 1725

Scintillation crystal array 1730

Ceramic substrate 1720

Low density connector

1740

EP 2 401 635 B1

Figure 17

**EP 2 401 635 B1**

**Patent documents cited in the description**

- WO 2007068933 A